# EUROPEAN PATENT SPECIFICATION

(11) **EP 2 924 482 B1**
(45) Date of publication and mention of the grant of the patent: **20.12.2017**
(21) Application number: 14161764.7
(22) Date of filing: 26.03.2014
(51) Int. Cl.: G02B 6/126, G02B 6/14

(54) **Polarisation mode converter with an asymmetric silicon nitride waveguide**
Polarisationmodal Umsetzer mit einem asymmetrischem Siliziumnitrid-Wellenleiter
Convertisseur de modes de polarisation utilisant un guide d'ondes de nitrure de silicium asymétrique

(43) Date of publication of application: 30.09.2015
(73) Proprietor: Huawei Technologies Co., Ltd., Longgang District Shenzhen, Guangdong 518129 (CN)
(72) Inventor: Brouckaert, Joost, 80992 München (DE); Collins, Tom, 80992 München (DE)
(74) Representative: Kreuz, Georg Maria

(56) References cited:
- VOEVODIN A A ET AL: "POSSIBILITY OF DEVELOPING NEW INTEGRATED-OPTICS POLARIZERS AND WAVEGUIDE MODE CONVERTERS", SOVIET TECHNICAL PHYSICS LETTERS, AMERICAN INSTITUTE OF PHYSICS. NEW YORK, US, vol. 16, no. 12, December 1990 (1990-12), pages 953-955, XP000226503,
- AGNIHOTRI O P ET AL: "ADVANCES IN LOW TEMPERATURE PROCESSING OF SILICON NITRIDE BASED DIELECTRICS AND THEIR APPLICATIONS IN SURFACE PASSIVATION AND INTEGRATED OPTICAL DEVICES", SEMICONDUCTOR SCIENCE AND TECHNOLOGY, IOP PUBLISHING LTD, GB, vol. 15, no. 7, 2000, pages R29-R40, XP000950158, ISSN: 0268-1242, DOI: 10.1088/0268-1242/15/7/201
- MERTENS K ET AL: "NEW HIGHLY EFFICIENT POLARIZATION CONVERTERS BASED ON HYBRID SUPERMODES", JOURNAL OF LIGHTWAVE TECHNOLOGY, IEEE SERVICE CENTER, NEW YORK, NY, US, vol. 13, no. 10, 10 October 1995 (1995-10-10), pages 2087-2092, XP000596091, ISSN: 0733-8724, DOI: 10.1109/50.469723
- MERTENS K ET AL: "First Realized Polarization Converter Based on Hybrid Supermodes", IEEE PHOTONICS TECHNOLOGY LETTERS, IEEE SERVICE CENTER, PISCATAWAY, NJ, US, vol. 10, no. 3, 3 March 1998 (1998-03-03), XP011045961, ISSN: 1041-1135

## Description

### TECHNICAL FIELD

The present invention relates to a field of photonic integrated circuits and in particular to a waveguide configuration, such as a polarization splitter and a polarization splitter and rotator, on the basis of silicon nitride or another semiconductor having a refractive index in the range of silicon nitride.

### BACKGROUND

Silicon photonics is rapidly gaining importance as a generic technology platform for a wide range of applications in telecom, datacom, interconnect and sensing. It allows implementing photonic functions through the use of CMOS compatible wafer-scale technologies on high quality, low cost silicon substrates. However, pure passive silicon waveguide devices still have limited performance in terms of insertion loss, phase noise (which results in channel crosstalk) and temperature dependency. This is due to the high refractive index contrast between the SiO₂ (silicon dioxide) cladding and the Si (silicon) core, the non-uniform Si layer thickness and the large thermo-optic effect of silicon.

Silicon nitride-based passive devices offer superior performance, both in terms of insertion loss and phase noise. This is mainly due to the slightly lower refractive index contrast between silicon nitride (n=2) and silicon dioxide (1.5) versus silicon (n=3.5) and silicon dioxide. Both material systems (silicon and silicon nitride waveguides) however have a strong polarization dependency (as compared to e.g. silica waveguides) In order to fabricate polarization independent optical circuits, polarization splitter and rotators (PSRs) are needed as key building blocks. Only a limited number of polarization splitters and rotators in silicon nitride have been published. There are publications based on mode evolution designs.
An example of a polarization splitter and rotator based on mode evolution is reported by Barwicz et al. "Polarization-transparent microphotonic devices in the strong confinement limit", Nat. Photon., Vol. 1, pp. 57, 2007. The PSR has a good performance over a broad wavelength range and was implemented in a polarization diversity configuration with a ring resonator as optical component. The waveguides consisted of 420nm thick SiNₓ. The major drawback of this device, however, and all mode-evolution based PSRs in general is the complex fabrication. It needs multilevel patterning, high aspect ratio features and locally thick SiNₓ layers.

Chen et al., "Polarization-Diversified DWDM Receiver on Silicon Free of Polarization-dependent Wavelength Shift", OFC/NFOEC, OW3G.7, 2012 reported a SiNₓ arrayed waveguide grating in a polarization diversity configuration. However, this is an example in which SiNₓ is used as a high performance passive waveguide layer on top of an active silicon photonic circuit. The splitting/rotation functionality was implemented in the silicon layer, which is more straightforward.

VOEVODIN A A ET AL: "POSSIBLITY OF DEVELOPING OF NEW INTEGRATED-OPTICS POLARIZERS AND WAVEGUIDE MODE CONVERTERS", SOVIET TECHNICAL PHYSICS LETTERS, AMERICAN INSTITUTE OF PHYSICS, discloses an integrated-optics polarizer and waveguide mode converter which is prepared on a basis of channel optical waveguides formed by ion exchange in a melt of potassium nitrite (KNO2) in substrates of the optical glass K-8.

### SUMMARY OF THE INVENTION

The objective of the present invention is to provide a high performance and easy to fabricate polarization dependent mode converter or polarization splitter and rotator on the basis of a silicon nitride waveguide, or a comparable waveguide material.

A first aspect of the invention provides a polarization dependent mode converter on a semiconductor basis, having a waveguide made of a waveguide material comprising SiNₓ or another solid waveguide material with a refractive index between 1.7 to 2.3, such as SiC or SiON, embedded in a cladding material comprising SiO₂ or another solid cladding material having a refractive index less than 1.6 and above 1, wherein the waveguide includes in a portion along its lengthwise extension a first section having a vertical asymmetric configuration, the asymmetric configuration includes a thin layer of silicon above the waveguide material, the thickness of the thin Si-layer in vertical direction is less than the thickness of the waveguide material in the same vertical direction.

In the first section, which may also be called "adiabatic taper", the vertical asymmetric waveguide cross section will convert a TM-polarized mode (TM0) to a first order TE-polarization mode (TE1) while the TE-polarization mode (TE0) remains unaffected. Thus, the adiabatic taper with the vertical asymmetry provides a polarization conversion.

According to a first implementation of the invention, the silicon layer has a thickness between 10 nm and 100 nm in the vertical direction. The waveguide material may have a thickness between more than 100 nm and 600 nm, preferably between 300 nm and 500 nm in the same vertical direction.

The proper design of the vertically asymmetric waveguide configuration has the effect that the launched TE0-mode will keep its polarization state while the TM0-modes convert into the TE1-mode and the input and the output for both TE and TM launched polarization modes are properly confined in the waveguide configuration. Thus, the mode conversion is very efficient and is tolerant to slight dimensional variations of the cross section.

According to a second implementation of the invention, the thin Si-layer is arranged directly on top of the waveguide material (on top means on top in the vertical direction). According to an alternative implementation, the thin Si-layer may be separated from the top of the waveguide material in vertical direction by a layer of the cladding material. The cladding material between the upper surface of the waveguide material and the lower surface of the thin silicon layer may have a thickness between 1 nm and 100 nm in the vertical direction.

Both configurations with or without separating layer between the waveguide material and the thin Si-layer provides a adequate confinement of the relevant TE- and TM-modes in the waveguide.

According to a third implementation of the invention, the thin silicon layer may have a length between 100 µm and 800 µm, preferably between 200 µm and 600 µm in the lengthwise direction of the waveguide. As compared to other silicon nitride waveguides using other top cladding materials to obtain vertical asymmetry (e.g. silicon dioxide bottom cladding and a top cladding of a material with refractive index 1.7), the total length of the asymmetric section may be shorter which is a benefit for the construction of integrated waveguide circuitries.

According to a fourth implementation of the invention, the thin silicon layer may have one or more tapering transition regions on a first end and/or on a second end, wherein the first and second ends are defined by the respective input and output sides of the vertical asymmetric portion of the waveguide in a lengthwise direction of the waveguide. The tapering transition regions may have the benefit that any reflection of the electromagnetic wave entering or leaving the vertical asymmetric portion of the waveguide construction can be reduced in comparison to a sharp transition between the symmetric waveguide configuration and the asymmetric waveguide configuration. The one or more transition regions may have the form of a triangle with a peak of the triangle facing away from the respective end of the thin silicon layer. According to a further implementation, the transition regions may include two or more triangles next to each other with the two or more peaks facing away from the respective ends of the silicon layer. According to a preferred implementation, the transition region of the first end includes a single triangle and the transition region of the second end includes two triangles next to each other.

According to a fifth implementation of the invention, the transition regions may further include a trapezium forming a transition between the basis of the one or more triangles and the silicon layer of its full width. The trapezium also provides a smooth transition from the outer part of the transition regions to the silicon layer in its middle part between the two ends, where the silicon-layer has its full width.

According to a sixth implementation of the invention, the thin silicon layer has a width in a horizontal direction which is equal to the width of the waveguide material in the horizontal direction taken in the same cross section. According to this embodiment, only the transition regions at the first end and/or the second end of the vertically asymmetric part of the waveguide, if any, have a thin silicon layer which has a width less than the corresponding width of the waveguide material in the same cross section.

A second aspect of the invention refers to a polarization splitter and rotator including the polarization dependent mode converter of the first aspect of the invention and the second section, wherein the second section includes means to convert a TE1 mode from the polarization dependent mode converter to a TE0 mode and couple it into a first output port and means to couple a TE0 mode from the polarization splitter without conversion in a second output port. The second section of the combined polarization splitter and rotator, thus, provides on the first output port a TE0-mode (being the original TE-mode) and TE0-mode on a second output port (converted from the original TM-mode).

For the second section of the second aspect of the invention, vertical asymmetry is not needed. According to a seventh implementation of the invention, the second portion includes a vertical symmetry. This has the benefit that it can be easily produced.

The means in the second portion may include a directional coupler in accordance with the eighth implementation of the invention. As an alternative, in accordance with a ninth implementation of the invention the means of the second portion may also include an Y-junction, a phase section to introduce a phase shift between the outputs of the Y-junction and a multi-mode interference coupler. Both implementations provide the effect that a TE1-mode is converted into a TE-0-mode and coupled in the first output port and a TE0-mode is coupled in the second output port without conversion.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, but modifications on these embodiments are possible without departing from the scope of the present invention as defined in the claims.
- FIG. 1: shows a waveguide cross section of a vertical asymmetric configuration according to embodiments of the invention.
- FIG. 2: shows a perspective view of the waveguide configuration of FIG. 1 without the upper cladding material.
- FIG. 3: shows a perspective view of the waveguide configuration of FIG. 1 in an alternative embodiment having transition regions.
- FIG. 4: shows a top view of a vertically asymmetric waveguide configuration according to an embodiment of the invention without the upper cladding material.
- FIG. 5: shows a top view of an asymmetric vertical waveguide configuration without the upper cladding material of a further embodiment.
- FIG. 6: shows the propagation of TE- and TM-polarized lights in a vertical asymmetric waveguide configuration of an embodiment of the invention in a cross section on the input side, in a top view, and in a cross section on the output side, re-spectively.
- FIG. 7a: shows a diagram for a TM0 to TE1 conversion efficiency as a function of the asymmetric section length for the different waveguide configurations.
- FIG. 7b: shows cross section views of the different waveguide configurations to which FIG. 7a refers.
- FIG. 8a: shows a diagram of the conversion efficiency for different waveguide width variations of a 250 µm long asymmetric section.
- FIG. 8b: shows a graph corresponding to FIG. 8a, but for a 500 µm long asymmetric section.
- FIG. 9: shows a top view of the waveguide configuration of a polarization splitter and rotator according to an embodiment of the invention.
- FIG. 10: shows a top view of a waveguide configuration of a polarization splitter and rotator according to an alternative embodiment of the invention.

### Detailed Description of the Embodiments

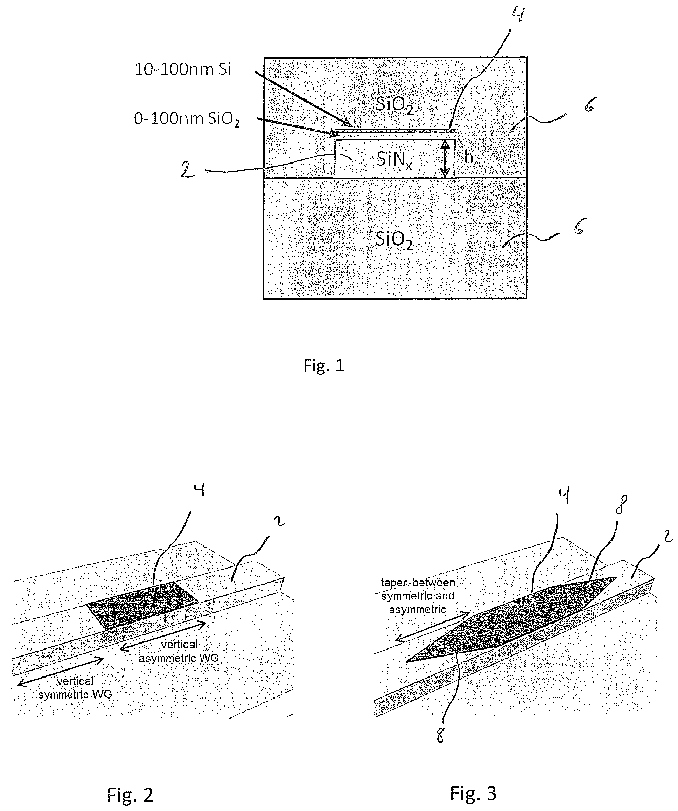

With reference to FIG. 1, the cross section of silicon nitride waveguide within a silica top and silica bottom cladding is shown. A waveguide 2 includes a waveguide material made of silicon nitride (generally refered to as SiNₓ), such as stochiometric silicon nitride: Si₃N₄.

A thin silicon layer 4 which has a thickness between about 10 nm to 100 nm is arranged on top of the waveguide material to create vertical asymmetry. The thin silicon layer 4 has the thickness in the vertical direction which is less than the thickness h of the waveguide material 2. The thickness of the waveguide material 2 is dependent on the wavelength for the application. For a wavelength around 1.55 µm, the typical thickness of the waveguide material is about 400 nm.

The waveguide material 2 and the thin silicon layer 4 are embedded in a cladding material 6 which comprise SiO₂.

A skilled person in this field will understand that the waveguide materials SiNₓ which has a refractive index (for a wavelength around 1.5 µm) of about 2 may also be replaced by another waveguide material having a refractive index between 1.7 to 2.3. Examples of such waveguide material which can also form embodiments of the invention are SiC (silicon carbide) or SiOₓN_{y} (silicon oxynitride) with values of x and y leading to the desired refractive index. Moreover, the cladding material which comprises SiO₂ having a refractive index of about 1.45 may also be replaced by another solid cladding material having a refractive index in the range of above 1 and less than 1.7, for example SiOₓN_{y} (silicon oxyntride) with values of x and y leading to the desired refractive index according to different embodiments of the invention.

According to a first embodiment, the standard silicon nitride waveguide 2 with a symmetric cladding can be butt-coupled to the vertically asymmetric section as shown in FIG. 2. In this case, there may be a transition loss due to reflection of electromagnetic wave on the sharp transition from the vertical symmetric waveguide section to the vertical asymmetric waveguide section. By adding transition regions 8 which include short tapers, as shown in the embodiment of FIG. 3, the transition loss is negligible. According to the embodiment of FIG. 3, each transition region 8 has the form of a single triangle having the peak facing away from the respective end of the vertical asymmetric waveguide section.

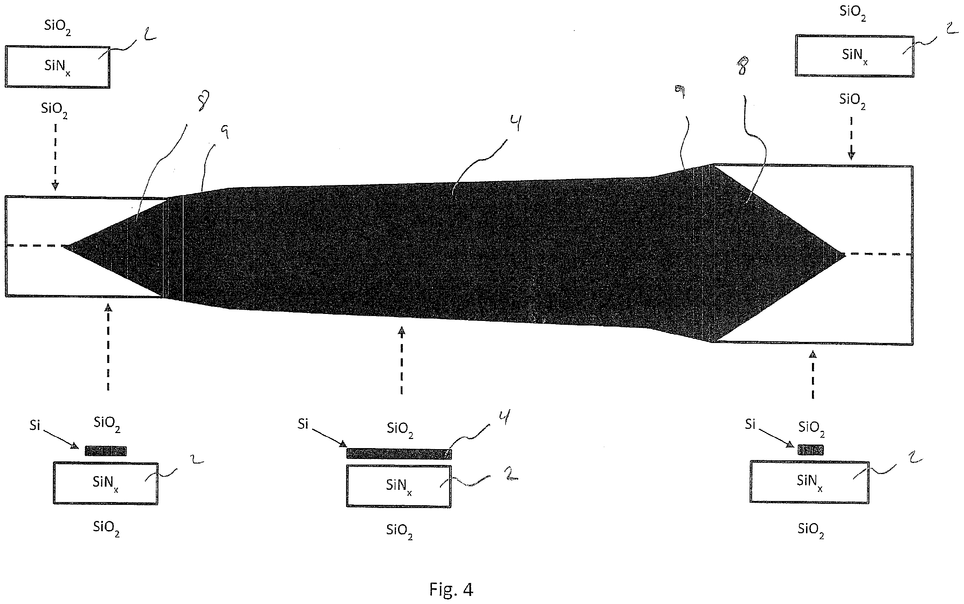

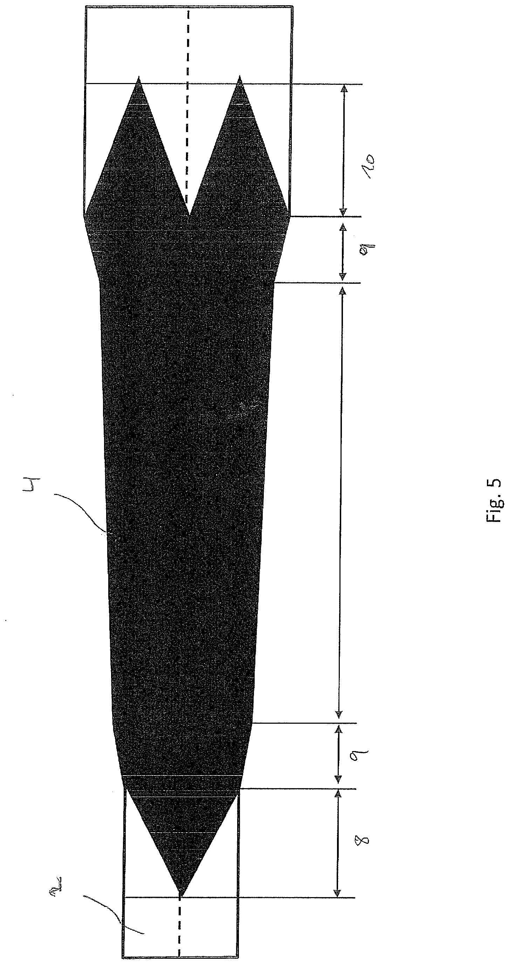

Further embodiments having different kinds of transition regions are shown in FIGs 4 and 5.

According to the embodiment of FIG. 4, the first transition region 8 includes a single triangle with a peak facing away from the first end of the thin layer 4. Moreover, it includes a transition region in the form of a trapeze 9 between the triangle part and the main part of the thin layer 4. FIG. 4 also shows respective cross sectional views perpendicular to the lengthwise direction of the waveguide. As can be seen from the cross sectional views in the transition region, the thin silicon layer covers the full width of the waveguide material 2, whereas in the main section of the vertically asymmetric waveguide, the thin silicon layer 4 covers only part of the full width of the waveguide material 2.

FIG. 5 shows a further embodiment having the same transition regions 8, 9 on the first end of the asymmetric waveguide section as an embodiment of FIG. 4, whereas the transition region on the second end of the asymmetric waveguide section includes behind a trapezoid region 9 a transition region comprising two triangles 10 which are arranged next to each other. Both triangles have their peaks facing away from the second end of the asymmetric waveguide section.

The waveguide configurations as presented above results in a strong vertical asymmetry. This allows for an efficient polarization-dependent mode conversion as described below.

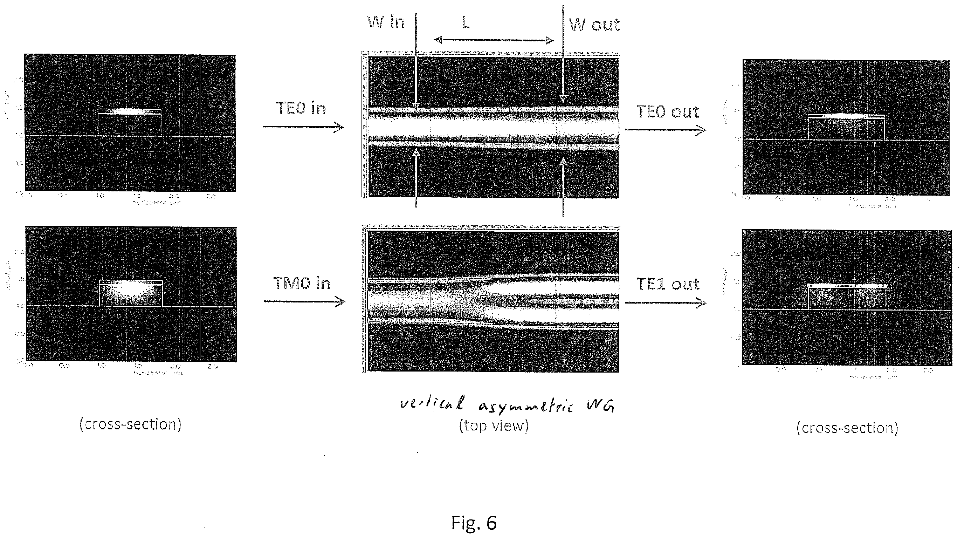

FIG. 6 shows a behaviour of a 200 µm long asymmetric waveguide section in a waveguide cross section consisting of a 400 nm thick SiNₓ waveguide 2 with a 80 nm thick Si-layer 4 on top. An interfacing layer of the cladding material 6 between the waveguide material 2 and the Si-layer 4 is 5 nm thick. The mode profiles at the input and the output of the vertical asymmetric section for both TE and TM launched polarizations are shown in the first and second row, respectively.

By proper design of the asymmetric waveguide section, the launched TE-mode will keep its polarization state (TE0>TE0) as shown in the first row of FIG. 6, while TM-mode converts into a first order TE-mode (TM0>TE1), as shown in the second row of FIG. 6. Thus, the asymmetric waveguide section provides a polarization dependent mode converter which can be used in different applications, such as in a polarization splitter or a combined polarization splitter and rotator.

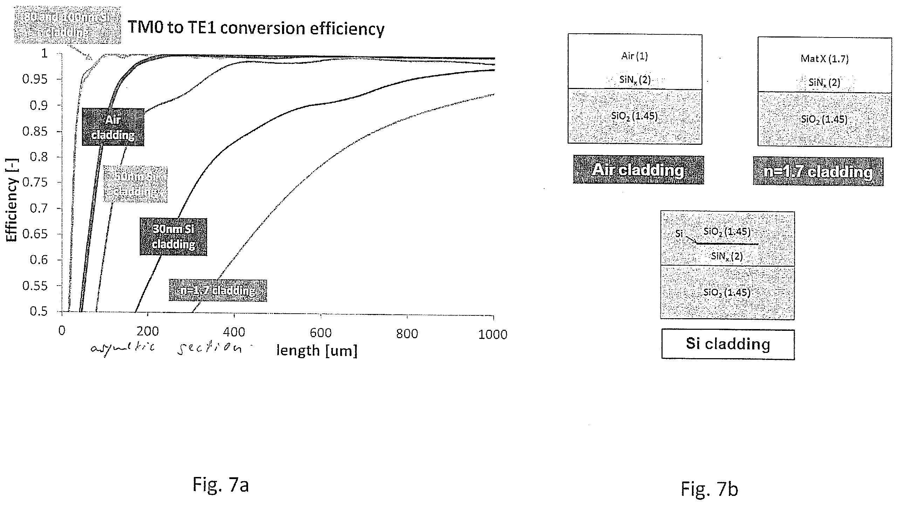

With reference to FIG.s 7a and 7b, the efficiency of the mode conversion is demonstrated. FIG. 7a shows the efficiency for the conversion from the TM-mode to the TE1-mode for different vertical asymmetric waveguide configurations as shown in FIG. 7b in a cross sectional view.

A strong vertical asymmetry could be obtained when the top cladding material is air, i.e. with a refractive index of 1 or another material with a refractive index of 1.7. As can be seen from the graph of FIG. 7a, the air cladding material would provide sufficient conversion efficiency after a length of about 200 µm. However, such an example is difficult to produce because it needs a hermetic package for confining the air cladding in the top region of the cladding material. Another competitive example including an upper cladding material with a material having a refractive index of 1.7 as shown in the graph of FIG. 7a. It can be seen that even after 1,000 µm length, the efficiency of the mode conversion is not satisfying. After 1,000 µm length the conversion efficiency is still below 95%. However, a vertical asymmetric waveguide configuration using a thin silicon layer in accordance with embodiments of the present invention provide better results. As can be seen from the leftmost graphs in FIG. 7a, a 80 nm or 100 nm silicon-layer and a cladding material of SiO₂ provide a conversion efficiency close to 100% already after less than 100 µm length. Thus, the embodiments of the invention allow shorter asymmetric waveguide section as compared to the case of a silicon nitride waveguide with an upper cladding material of n = 1.7. Moreover, no hermetic package is needed as compared to the competitive example using an upper cladding material of air.

Thus, most cases of a CMOS compatible material having a refractive index 1.7 would make it necessary to use very long asymmetric parts (L>1,000 µm) to obtain high conversion efficiency.

Having an air (n = 1) cladding on top of the SiNₓ waveguide on the other hand results in a strong asymmetry and possible short waveguide configuration. However, a hermetic package is needed in this case in order to keep the refractive index of the upper cladding material constant.

By using an asymmetric waveguide configuration of the present invention including the thin Si-layer 4 very efficient conversation can be obtained. For Si-layer thicknesses as thin as 30 nm, 800 µm long asymmetric waveguide sections result in more than 95% conversion efficiency.

By slightly increasing the thickness to 50 nm, the taper length can even decreased to 400 µm. When increasing the thickness further, the required asymmetric waveguide section length saturates. In the simulation example provided in FIG. 7a, the Si-thickness at which the saturation occurs is about 70 nm to 80 nm. For these thicknesses, even a shorter asymmetric length can be obtained as compared to the length needed having an air cladding. For a 80 nm thick Si-layer, 95% conversion is reached for a length as short as 50µm.

The simulations presented in FIG. 7a have been done for λ = 1.55 µm wavelength, but other wavelengths are also possible, e.g. 1.3 µm to 2 µm.

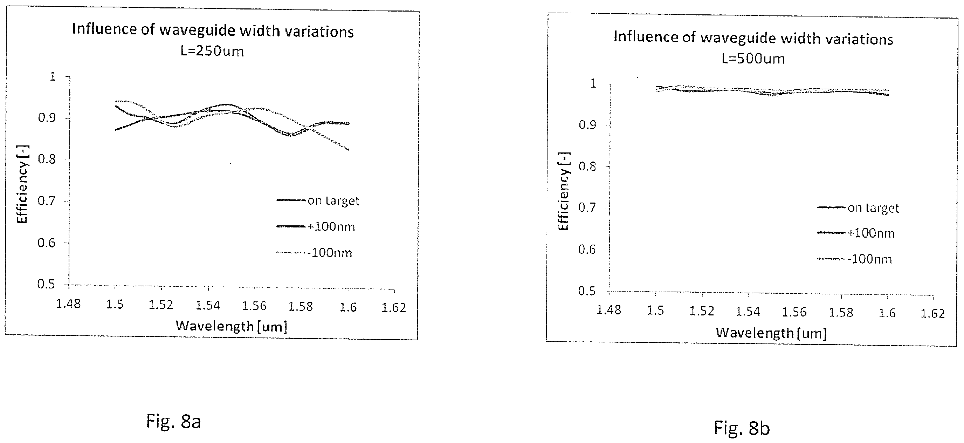

With reference to FIGs 8a and 8b, the tolerances to fabrication imperfections are demonstrated. As can be seen, if the asymmetric section is chosen sufficiently long, such as 500 µm as shown FIG. 8b, linewidth variations and layer thickness variations of ±10% can easily be tolerated.

FIGs 8a and 8b show simulation results for the TM0 to TE1 conversion efficiency including waveguide width variations. For these embodiments, the silicon layer thickness is only 50 nm, which requires a slightly longer asymmetric section. The SiNₓ waveguide thickness for the simulation was 400 nm including an interfacial SiO₂ thickness of 5 nm between the top of the waveguide material 2 and the silicon layer 4.

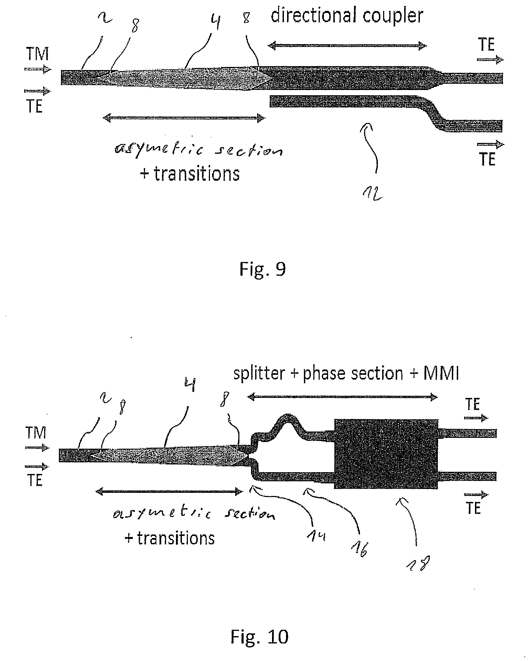

The asymmetric waveguide section of the embodiments of the invention as previously described may form part of a polarization splitter and rotator according to a further aspect of the invention. The polarization splitter and rotator includes a second section, wherein the TE1-mode (being the original TM-mode) needs to be converted to a TE0-mode and coupled to a first output port and the TE0-mode (being the original TE-mode) needs to be coupled to a second output port. For the second section, no vertical asymmetry is needed and a conventional SiNₓ waveguide with a SiO₂ cladding material on top and bottom of the waveguide materials can be used. Possible configurations for the second section in accordance with different embodiments of the invention are presented in FIGs 9 and 10.

In FIGs 9 and 10, the black part represents the vertical symmetric cross section consisting of a SiNₓ waveguide with a SiO₂ top and bottom cladding whereas the part denoted by 4 shows the top view of the thin Si-layer including the transition regions 8 which all together form the asymmetric section of the device.

According to the embodiment of FIG. 9, the asymmetric section is followed by a directional coupler 12. Therein, the TM0-mode coupled into the asymmetric section which is converted to a TE1-mode, is coupled into the first output port of the directional coupler, whereas the original TE0-mode on the other hand, which was not converted in the asymmetric section, is coupled to a second output port of the directional coupler.

According to the embodiment of FIG. 10, the same functionality as described for the directional coupler of FIG. 9 is provided by a Y-junction (splitter) 14, a phase section 16 and a multi-mode interference coupler 18. Also for the second section, the vertical asymmetry is not needed and a vertical symmetric construction provides the benefit of easier manufacturing. In the Y-junction 14, the TE0-mode and the TE1-mode from the output of the asymmetric section are split. The phase section 16 provides a phase shift such, as the phase shift of π/2, in one branch of the Y-junction. After the multi-mode interference coupler 18, a TE0-mode which corresponds to the original TE0-mode is coupled to a first output port and a TE0-mode which originates from the TM0-mode is coupled to the second output port.

The foregoing descriptions are only implementation manners of the present invention, but the protection of the scope of the present invention is not limited to this. Any variations or replacements can be easily made through person skilled in the art. Therefore, the protection scope of the present invention should be subject to the protection scope of the attached claims.

## Claims

1. A polarization dependent mode converter on a semiconductor basis,
having a waveguide made of a waveguide material (2) comprising SiNₓ or another solid waveguide material (2) having a refractive index between 1.7 to 2.3, embedded in a cladding material comprising SiO₂ or another solid cladding material having a refractive index less than 1.6 and above 1,
wherein the waveguide includes in a portion along its lengthwise extension a first section having a vertical asymmetric configuration, the asymmetric configuration includes a thin layer (4) of silicon above the waveguide material (2), the thickness of the thin Si-layer (4) in vertical direction is less than the thickness of the waveguide material in the same vertical direction.

2. The polarization dependent mode converter of claim 1, wherein the thin silicon layer (4) has a thickness between 10 nm und 100 nm in a vertical direction.

3. The polarization dependent mode converter of one of the previous claims, wherein the waveguide material (2) has a thickness (h) between more than 100 nm and 600 nm, preferably between 300 nm and 500 nm.

4. The polarization dependent mode converter of one of the previous claims, wherein the thin Si-layer is arranged directly on top of the waveguide material.

5. The polarization dependent mode converter of one of claim 1 to 3, wherein the thin Si-layer (4) is separated from the top of the waveguide material (2) in a vertical direction by a layer of the cladding material (6) having a thickness between 1 nm and 100 nm in the vertical direction.

6. The polarization dependent mode converter of one of the previous claims, wherein the thin Si-layer (45) has a length (L) between 10 µm and 2000 µm, preferably between 200 µm and 1500 µm, in the lengthwise direction of the waveguide.

7. The polarization dependent mode converter of one of the previous claims, wherein the thin Si-layer (4) has a tapering transition region (8, 9, 10) on a first end and/or on a second end, wherein the first and second ends are defined by the respective input and output side of the vertically asymmetric portion of the waveguide in the lengthwise direction of the waveguide.

8. The polarization dependent mode converter of claim 7, wherein at least one of the transition region has the form of a triangle (10) with the peak of the triangle facing away from the respective end of the thin Si-layer (4).

9. The polarization dependent mode converter of claims 7 or 8, wherein at least one of the transition regions (8) include two or more triangles next to each other with the two or more peaks facing away from the respective end of the thin Si-layer.

10. The polarization dependent mode converter of claims 8 and 9, wherein the transition region on the first end includes a single triangle (8) and the transition region on the second end includes two triangles (10) next to each other.

11. The polarization dependent mode converter of one of the claims 8 to 10, wherein one or both of the transition regions further includes a trapezium (9) forming a transition between the basis of the one or more triangles and Si-layer (4) of its full width.

12. The polarization dependent mode converter of one of the previous claims, wherein the thin Si-layer (4) has a width in horizontal direction which is equal to the width of the waveguide material (2) in the horizontal direction taken in the same cross-section.

13. The polarization dependent mode converter of one of the previous claims, wherein the horizontal width of the waveguide (2) tapers from an input region to an output region of the asymmetric section over the full length of the waveguide in the asymmetric section.

14. A polarization splitter and rotator including a polarization dependent mode converter of one of the previous claims and a second section, wherein the second section includes means to convert a TE1 mode from the polarization dependent mode converter to a TE0 mode and couple it into a first output port and means to couple a TE0 mode from the polarization dependent mode converter without conversion in a second output port.

15. The polarization splitter and rotator of claim 13, wherein the second section includes vertical symmetry.

16. The polarization splitter and rotator of claim 14 or 15, wherein the means include a directional coupler (12).

17. The polarization splitter and rotator of claims 14 or 15, wherein the means of the second portion includes a Y-junction (14), a phase section (16) to introduce a phase shift between the branches of the Y-junction and a multi-mode interference coupler (18).

## Patentansprüche

1. Polarisationsabhängiger Modenwandler auf einer Halbleiterbasis,
der einen Wellenleiter aufweist, der aus einem Wellenleitermaterial (2), das SiNₓ oder ein anderes festes Wellenleitermaterial (2), das einen Brechungsindex zwischen 1,7 und 2,3 aufweist, umfasst, hergestellt ist, der in einem Ummantelungsmaterial eingebettet ist, das SiO₂ oder ein anderes festes Ummantelungsmaterial, das einen Brechungsindex von weniger als 1,6 und mehr als 1 aufweist, umfasst,
wobei der Wellenleiter in einem Anteil entlang seiner Längsausdehnung einen ersten Abschnitt beinhaltet, der eine vertikal asymmetrische Konfiguration aufweist, wobei die asymmetrische Konfiguration eine dünne Schicht (4) aus Silicium über dem Wellenleitermaterial (2) beinhaltet, wobei die Dicke der dünnen Si-Schicht (4) in Vertikalrichtung kleiner als die Dicke des Wellenleitermaterials in derselben Vertikalrichtung ist.

2. Polarisationsabhängiger Modenwandler nach Anspruch 1, wobei die dünne Silicium-Schicht (4) eine Dicke zwischen 10 nm und 100 nm in einer Vertikalrichtung aufweist.

3. Polarisationsabhängiger Modenwandler nach einem der vorhergehenden Ansprüche, wobei das Wellenleitermaterial (2) eine Dicke (h) zwischen mehr als 100 nm und 600 nm, bevorzugt zwischen 300 nm und 500 nm, aufweist.

4. Polarisationsabhängiger Modenwandler nach einem der vorhergehenden Ansprüche, wobei die dünne Si-Schicht direkt auf dem Oberteil des Wellenleitermaterials angeordnet ist.

5. Polarisationsabhängiger Modenwandler nach einem der Ansprüche 1 bis 3, wobei die dünne Si-Schicht (4) in einer Vertikalrichtung durch eine Schicht des Ummantelungsmaterials (6) vom Oberteil des Wellenleitermaterials (2) getrennt ist, die in Vertikalrichtung eine Dicke zwischen 1 nm und 100 nm aufweist.

6. Polarisationsabhängiger Modenwandler nach einem der vorhergehenden Ansprüche, wobei die dünne Si-Schicht (45) eine Länge (L) in der Längsrichtung des Wellenleiters zwischen 10 µm und 2000 µm, bevorzugt zwischen 200 µm und 1500 µm, aufweist.

7. Polarisationsabhängiger Modenwandler nach einem der vorhergehenden Ansprüche, wobei die dünne Si-Schicht (4) eine sich verjüngende Übergangsregion (8, 9, 10) an einem ersten Ende und/oder an einem zweiten Ende aufweist, wobei das erste Ende und das zweite Ende durch die jeweilige Eingangs- und Ausgangsseite des vertikal asymmetrischen Anteils des Wellenleiters in der Längsrichtung des Wellenleiters definiert sind.

8. Polarisationsabhängiger Modenwandler nach Anspruch 7, wobei mindestens eine der Übergangsregionen die Form eines Dreiecks (10) aufweist, wobei die Spitze des Dreiecks von dem jeweiligen Ende der dünnen Si-Schicht (4) weggerichtet ist.

9. Polarisationsabhängiger Modenwandler nach Ansprüche 7 oder 8, wobei mindestens eine der Übergangsregionen (8) zwei oder mehr nebeneinander befindliche Dreiecke aufweist, wobei deren zwei oder mehr Spitzen von dem jeweiligen Ende der dünnen Si-Schicht weggerichtet sind.

10. Polarisationsabhängiger Modenwandler nach Anspruch 8 und 9, wobei die Übergangsregion am ersten Ende ein einziges Dreieck (8) beinhaltet und die Übergangsregion am zweiten Ende zwei nebeneinander befindliche Dreiecke (10) beinhaltet.

11. Polarisationsabhängiger Modenwandler nach einem der Ansprüche 8 bis 10, wobei eine der oder beide Übergangsregionen ferner ein Trapez (9) beinhalten, das einen Übergang zwischen der Basis des einen oder der mehreren Dreiecke und der Si-Schicht (4) bei ihrer vollen Breite bildet.

12. Polarisationsabhängiger Modenwandler nach einem der vorhergehenden Ansprüche, wobei die dünne Si-Schicht (4) in Horizontalrichtung eine Breite aufweist, die gleich der Breite des Wellenleitermaterials (2) in der Horizontalrichtung am selben Querschnitt ist.

13. Polarisationsabhängiger Modenwandler nach einem der vorhergehenden Ansprüche, wobei sich die horizontale Breite des Wellenleiters (2) von einer Eingangsregion bis zu einer Ausgangsregion des asymmetrischen Abschnitts über die volle Länge des Wellenleiters in dem asymmetrischen Abschnitt verjüngt.

14. Polarisationsteiler und -rotator, der einen polarisationsabhängigen Modenwandler nach einem der vorhergehenden Ansprüche und einen zweiten Abschnitt beinhaltet, wobei der zweite Abschnitt Mittel zum Umwandeln einer TE1-Mode von dem polarisationsabhängigen Modenwandler zu einer TE0-Mode und zum Einkoppeln in einen ersten Ausgangsanschluss und Mittel zum Einkoppeln einer TE0-Mode von dem polarisationsabhängigen Modenwandler ohne Umwandlung in einen zweiten Ausgangsanschluss beinhaltet.

15. Polarisationsteiler und -rotator nach Anspruch 13, wobei der zweite Abschnitt vertikale Symmetrie beinhaltet.

16. Polarisationsteiler und -rotator nach Anspruch 14 oder 15, wobei die Mittel einen Richtkoppler (12) beinhalten.

17. Polarisationsteiler und -rotator nach Ansprüche 14 oder 15, wobei die Mittel des zweiten Abschnitts einen Y-Koppler (14), einen Phasenabschnitt (16) zum Einführen einer Phasenverschiebung zwischen den Zweigen des Y-Kopplers und einen Multimoden-Interferenzkoppler (18) beinhalten.

## Revendications

1. Convertisseur de mode dépendant de la polarisation sur une base semi-conductrice, comportant un guide d'ondes constitué d'un matériau de guide d'ondes (2) comportant du SiNₓ ou d'un autre matériau de guide d'ondes solide (2) présentant un indice de réfraction compris entre 1,7 et 2,3, incorporé dans un matériau de revêtement contenant du SiO₂ ou un autre matériau de revêtement solide présentant un indice de réfraction inférieur à 1,6 et supérieur à 1,
dans lequel le guide d'ondes comprend, dans une partie le long de son extension longitudinale, une première section ayant une configuration asymétrique verticale, la configuration asymétrique comprend une mince couche (4) de silicium au-dessus du matériau de guide d'ondes (2), l'épaisseur de la mince couche de Si (4) dans la direction verticale est inférieure à l'épaisseur du matériau de guide d'ondes dans la même direction verticale.

2. Convertisseur de mode dépendant de la polarisation selon la revendication 1, dans lequel la mince couche de silicium (4) présente une épaisseur comprise entre 10 nm et 100 nm dans une direction verticale.

3. Convertisseur de mode dépendant de la polarisation selon l'une quelconque des revendications précédentes, dans lequel le matériau de guide d'ondes (2) présente une épaisseur (h) comprise entre plus de 100 nm et 600 nm, de préférence entre 300 nm et 500 nm.

4. Convertisseur de mode dépendant de la polarisation selon l'une quelconque des revendications précédentes, dans lequel la mince couche de silicium est disposée directement sur le matériau de guide d'ondes.

5. Convertisseur de mode dépendant de la polarisation selon l'une quelconque des revendications 1 à 3, dans lequel la mince couche de silicium (4) est séparée de la partie supérieure du matériau de guide d'ondes (2) dans une direction verticale par une couche du matériau de revêtement (6) ayant une épaisseur comprise entre 1 nm et 100 nm dans la direction verticale.

6. Convertisseur de mode dépendant de la polarisation selon l'une quelconque des revendications précédentes, dans lequel la mince couche de silicium (4) présente une longueur (L) comprise entre 10 µm et 2 000 µm, de préférence entre 200 µm et 1 500 µm dans le sens longitudinal du guide d'ondes.

7. Convertisseur de mode dépendant de la polarisation selon l'une quelconque des revendications précédentes, dans lequel la mince couche de silicium (4) comporte une région de transition décroissante (8, 9, 10) sur une première extrémité et/ou sur une seconde extrémité, dans lequel les première et seconde extrémités sont définies par le côté d'entrée et de sortie respectif de la partie verticalement asymétrique du guide d'ondes dans le sens longitudinal du guide d'ondes.

8. Convertisseur de mode dépendant de la polarisation selon la revendication 7, dans lequel au moins l'une des régions de transition a la forme d'un triangle (10), le sommet du triangle étant opposé à l'extrémité respective de la mince couche de silicium (4).

9. Convertisseur de mode dépendant de la polarisation selon les revendications 7 ou 8, dans lequel au moins l'une des régions de transition (8) comprend au moins deux triangles les uns à côté des autres, les deux, ou plus, sommets étant opposés à l'extrémité respective de la mince couche de silicium.

10. Convertisseur de mode dépendant de la polarisation selon les revendications 8 et 9, dans lequel la région de transition sur la première extrémité comprend un seul triangle (8) et la région de transition sur la seconde extrémité comprend deux triangles (10) l'un à côté de l'autre.

11. Convertisseur de mode dépendant de la polarisation selon l'une quelconque des revendications 8 à 10, dans lequel une ou les deux régions de transition comprennent en outre un quadrilatère trapézoïdal (9) formant une transition entre la base d'un ou de plusieurs triangles et la couche de silicium (4) sur toute sa largeur.

12. Convertisseur de mode dépendant de la polarisation selon l'une quelconque des revendications précédentes, dans lequel la mince couche de silicium (4) présente une largeur dans la direction horizontale qui est égale à la largeur du matériau de guide d'ondes (2) dans la direction horizontale prise dans la même section transversale.

13. Convertisseur de mode dépendant de la polarisation selon l'une quelconque des revendications précédentes, dans lequel la largeur horizontale du guide d'ondes (2) s'effile depuis une région d'entrée jusqu'à une région de sortie de la section asymétrique sur toute la longueur du guide d'ondes dans la section asymétrique.

14. Séparateur et rotateur de polarisation comprenant un convertisseur de mode dépendant de la polarisation selon l'une quelconque des revendications précédentes et une seconde section, dans lequel la seconde section comprend un moyen pour convertir un mode TE1 du convertisseur de mode dépendant de la polarisation en un mode TE0 et le coupler dans un premier port de sortie et un moyen pour coupler un mode TE0 du convertisseur de mode dépendant de la polarisation sans conversion dans un second port de sortie.

15. Séparateur et rotateur de polarisation selon la revendication 13, dans lequel la seconde section comprend une symétrie verticale.

16. Séparateur et rotateur de polarisation selon la revendication 14 ou 15, dans lequel les moyens comprennent un coupleur directionnel (12).

17. Séparateur et rotateur de polarisation selon les revendications 14 ou 15, dans lequel le moyen de la seconde section comprend une jonction en Y (14), une section de phase (16) pour introduire un déphasage entre les branches de la jonction en Y et un coupleur à interférences multimode (18).
